# EUROPÄISCHE PATENTSCHRIFT

(11) **EP 3 250 915 B1**
(45) Veröffentlichungstag und Bekanntmachung des Hinweises auf die Patenterteilung: **10.05.2023**
(21) Anmeldenummer: 16721633.2
(22) Anmeldetag: 25.04.2016
(51) Int. Cl.: G01N 27/30, G01N 27/401

(54) **SCHUTZBESCHICHTUNG FÜR DAS DIAPHRAGMA ODER DIE OPEN-JUNCTION-ÖFFNUNG DER BEZUGSELEKTRODE EINER POTENTIOMETRISCHEN MESSKETTE**
PROTECTIVE COATING FOR THE DIAPHRAGM OR THE OPEN-JUNCTION OPENING OF THE REFERENCE ELECTRODE OF A POTENTIOMETRIC MEASURING CHAIN
REVÊTEMENT DE PROTECTION POUR LE DIAPHRAGME OU L'OUVERTURE DE PASSAGE OUVERT DE L'ÉLECTRODE DE RÉFÉRENCE D'UNE CHAÎNE DE MESURE POTENTIOMÉTRIQUE

(30) Priorität: 29.04.2015 DE 102015005472
(43) Veröffentlichungstag der Anmeldung: 06.12.2017
(73) Patentinhaber: Sartorius Stedim Biotech GmbH, 37079 Göttingen (DE)
(72) Erfinder: GRIMM, Christian, 37308 Heilbad Heiligenstadt (DE); WEICHERT, Henry, 04720 Westewitz (DE); LUEDERS, Julia, 37079 Göttingen (DE)
(74) Vertreter: Novagraaf International SA
(86) Internationale Anmeldenummer: PCT/EP2016/000654
(87) Internationale Veröffentlichungsnummer: WO 2016/173701

(56) Entgegenhaltungen:
- DE-A1-102009 036 217
- DE-A1-102010 063 031
- GB-A- 729 575
- US-A- 3 756 936
- US-A- 5 833 825

## Beschreibung

Die Erfindung betrifft eine potentiometrische Messkette, vorzugsweise zur einmaligen Verwendung (Single Use), wobei das Diaphragma oder eine Open-Junction-Öffnung der Bezugselektrode zum Messgut mit einer Schutzbeschichtung (nachstehend auch Siegelschicht genannt) versehen ist, die ein Austreten oder Auskristallisieren von Stoffen verhindert, wenn die Messkette sterilisiert und über längere Zeit trocken gelagert wird.

Die pH-Wert-Bestimmung, d.h. die Bestimmung der Wasserstoffionenkonzentration als negativer Logarithmus, ist ein etabliertes Verfahren, um z.B. das Milieu einer biochemischen Umsetzung in einer Kulturflüssigkeit zu überwachen. Hierzu eignet sich, aufgrund der Robustheit des Messverfahrens und Equipments, die potentiometrische Bestimmung hervorragend. Bei der potentiometrischen Bestimmung wird das Potential stromlos gemessen, das sich zwischen Messelektrode und einer weiteren Elektrode, die aufgrund ihres konstanten Potentials Bezugselektrode genannt wird, ausbildet. Beide Elektroden bilden eine so genannte potentiometrische Messkette. Die bekannteste Messelektrode zur Ermittlung des pH-Werts ist die Glaselektrode.

US 2014/0299471 beschreibt einen pH-Sensor mit einer Messelektrode aus Metall, die mit Nation beschichtet ist.

US 2010/0025235 beschreibt eine Glaselektrode mit einer Titandioxidschicht.

US 3 591 482 A offenbart Chloridionen-sensitive Vorrichtungen, worin die Silberchloridschicht einer Ag/AgCI-Elektrode mit einer dünnen Methacrylat-Schutzschicht beschichtet ist.

US 3,756,937 sowie US 5,833,825 beschreiben wasserlösliche Dextran- bzw. PVA-Schichten, aufgebracht auf dem Diaphragma entsprechender Referenzelektroden, z.B. einer Ag/AgCI-Referenzelektrode. DE10 2010 063 031 A1 betrifft einen potentiometrischen Sensor, insbesondere zur Verwendung in der Einweg-Messtechnik für biologische, pharmazeutische oder biotechnologische Prozesse, umfassend ein Gehäuse, in dem ein Referenzhalbzellenraum und ein von diesem getrennter Messhalbzellenraum gebildet sind, wobei der Referenzhalbzellenraum einen Referenzelektrolyten und mindestens einen Teil einer ersten Ableitelektrode zum Ableiten eines Potentials der Referenzhalbzelle enthält, und der Messhalbzellenraum durch eine Messmembran, insbesondere eine pH-sensitive Glasmembran, flüssigkeitsdicht verschlossen ist, und einen Innenelektrolyten und mindestens einen Teil einer zweiten Ableitelektrode zum Ableiten eines Potentials der Messhalbzelle aufweist.

Wie bereits betont, ist die Messung des pH-Werts eine der wesentlichen notwendigen Aufgaben in einem Zellkultur- oder Fermentationsprozess. In den meisten kommerziellen produktiven Upstream-Prozessen wird der pH Wert innerhalb der Kultur kontrolliert. Dazu ist eine *in situ* / inline-Messung des pH-Werts nötig. Als Messmittel kommen in herkömmlichen Edelstahlbioreaktoren meist klassische, elektrochemische Messsonden zum Einsatz. Diese werden z.B. über eine PG13.5 Verschraubung oder einen Ingold 25mm Port in das Reaktionsgefäß eingebracht. Diese Sonden zeichnen sich meist durch folgende Grundelemente aus:
- Messelektrode mit Elektrolyt
- Bezugselektrode mit Elektrolyt
- Diaphragma oder offener Übergang (open junction)
- Integrierter Temperatursensor (PT100/1000) zur Temperaturkorrektur

Der verwendete Elektrolyt kann dabei flüssig, gelartig oder fest sein und basiert häufig auf KCI-Lösungen oder anderen Salzlösungen. Bei Verwendung wird je nach Größe des aus Edelstahl gefertigten Bioreaktors die Elektrode vor Gebrauch entweder mit dem Reaktionsgefäß autoklaviert oder per Dampfsterilisation direkt im Reaktor sterilisiert. Dazu wird die pH-Elektrode, die meist in einer Lösung aus 3 molarer KCI-Lösung gelagert wird, aus der Aufbewahrungsflüssigkeit entnommen, gereinigt (in der Regel mit WFI - water for injection) und in das Reaktionsgefäß eingesetzt.

Der Trend der biopharmazeutischen Industrie geht nun stärker zu sogenannten Einwegbioreaktoren, wie z.B. Beutel aus Kunststofffolie (Bags). Auch hier wird selbstverständlich der pH-Wert kontrolliert. Dazu kann in solche Bioreaktoren auch eine elektrochemische pH Sonde eingebracht werden, die für den einmaligen Einsatz in Kunststoffeinwegbioreaktoren konzipiert ist. Diese pH-Elektroden zeichnen sich dadurch aus, dass sie trocken lagerbar sind, d.h. Sondenspitze und Diaphragma sind ausgetrocknet und können an der Luft über mehrere Monate z.B. in einem eingeschweißten Port im Bag gelagert werden. Das heißt, die Messkette ist durch Verschweißen, Kleben oder dergleichen fest bzw. integral und dadurch nicht zerstörungsfrei lösbar mit dem Bag verbunden.

Die allgemein übliche Methode zur Sterilisierung von Bags ist die Bestrahlung mit, laut regulatorischer Vorgaben, mindestens 25kGy, im Extremfall bis zu 50 kGy Gammastrahlung. Durch die Bestrahlung und im Verlaufe der trockenen Lagerung im Bag kann es über die Zeit zu einem Ausfluss von Elektrolyt über das Diaphragma oder die open junction kommen. Dies führt dazu, dass sich entweder Tropfen oder Kristalle des Elektrolyts an der Sondenspitze oder gar im Bag sammeln und sichtbar sind. Ein wesentliches Qualitätsmerkmal für Bags ist jedoch, dass diese vor Gebrauch frei von jeglichen sichtbaren Partikeln oder Verunreinigungen sind. Es versteht sich von selbst, dass diese Verunreinigungen vor der Verwendung des Einmal-Bioreaktors nicht mehr dem sterilisierten Bag entnommen werden dürfen. Selbst wenn die durch den austretenden Elektrolyt auftretenden Partikel oder Tropfen die Kultur und den Prozess nicht beeinflussen, ist dies eine ungewünschte Nebenerscheinung. Ein vermehrter Austritt von KCl kann vor allem bei kleinvolumigen Bags erhebliche Einflüsse auf die Kultur haben. Dies ist von Kundenseite unerwünscht.

Eine Aufgabe der vorliegenden Erfindung besteht somit darin, das Austreten von Bezugselektrodenelektrolyt zu verhindern oder zumindest stark zu minimieren, damit keine Verunreinigungen in Form von Kristallen aus dem Leitsalz der Bezugselektrodenflüssigkeit oder Tröpfchen der Bezugselektrodenflüssigkeit in das Messgut gelangen.

Diese Aufgabe wird durch eine potentiometrische Messkette gemäß Anspruch 1 gelöst, umfassend eine ionenselektive Elektrode, eine Bezugselektrode mit einem Bezugselektrodenraum und einen Bezugselektrodenelektrolyten darin, wobei die Bezugselektrode ein Diaphragma (8) oder eine Open-Junction-Öffnung oder eine Kombination davon aufweist, wobei mindestens das Diaphragma oder die Open-Junction-Öffnung mit einer bei Kontakt mit einer wässrigen Lösung ablösbaren und/oder auflösbaren Schutzbeschichtung (9) versehen ist, dadurch gekennzeichnet, dass das Material der ablösbaren und/oder auflösbaren Schutzbeschichtung (9) ausgewählt ist aus: Zuckern, Zuckeralkoholen und/oder löslicher Stärke, und/oder Gemischen davon mit Polyvinylalkohol und/oder mikrokristalliner Zellulose. Es kann aber auch die gesamte Sondenspitze überzogen sein.

In anderen Worten, die vorliegende Erfindung basiert auf einer Versiegelung des Diaphragmas oder der Open-Junction-Öffnung einer integral in einen Bioreaktor eingesetzten Single-use-pH-Elektrode mittels einer ablösbaren und/oder auflösbaren Schutzbeschichtung, wodurch in überraschender Weise die bislang beobachtete Kristallbildung bzw. Tröpfchenbildung, welche einen Sicherheits- und Qualitätsmangel darstellt, ausbleibt und das Messsystem trotz der Versiegelung bestimmungsgemäß verwendet werden kann, auch wenn der gesamte Bioreaktor vorher, z.B. durch Gammabestrahlung, sterilisiert wurde.

Vorteilhafte Weiterbildungen und Ausgestaltungen der Erfindung sind in den Unteransprüchen angegeben.

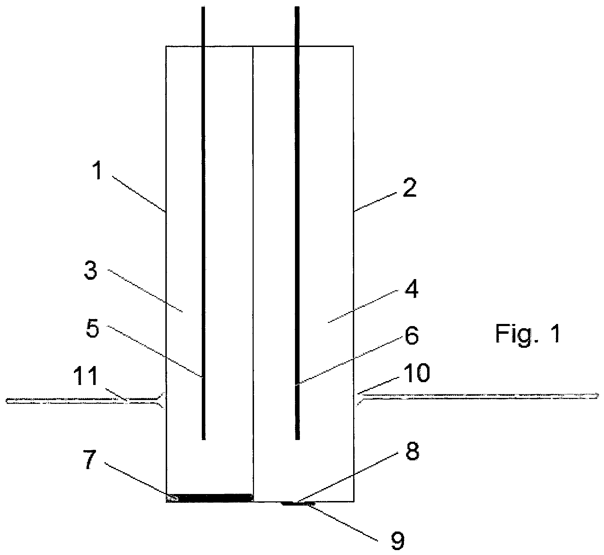

Die Erfindung wird nachfolgend anhand von detaillierten Ausführungsbeispielen mit Bezug auf die beiliegende Zeichnung (Figur 1) beschrieben.

Figur 1 zeigt eine mit der erfindungsgemäß eingesetzten ablösbaren und/oder auflösbaren Schutzbeschichtung 9 versehene potentiometrische Messkette (Elektroden 1 und 2), wobei der Übergang vom Bezugselektrodenraum 2 zum Messgutraum über eine winzige Öffnung (Open-Junction-Öffnung) 8 erfolgt. Anstelle der winzigen Öffnung 8 kann auch ein Diaphragma eingesetzt werden.

Die Glaselektrode ist sehr spezifisch für Wasserstoffionen bzw. Hydroniumionen H₃O⁺, in anderen Worten sie ist bezüglich dieser Ionen ionenselektiv. Das elektrochemische Potential der Glasmembran ändert sich in Abhängigkeit von der Aktivität der Wasserstoffionen in der Messlösung, dem Messgut. Die Glasmembran der pH-Messketten ist der am häufigsten eingesetzte elektrochemische Sensor. Eine ionenselektive Glasmembran kann als Festkörperelektrolyt angesehen werden: lonenaustausch- und - Umlagerungsvorgänge sind verantwortlich für die Potentialbildung. Hydroniumionen oder Hydroxylionen lagern sich an diese Membran und verschieben aktivitätsabhängig das Potential der Messkette. Das heißt, bei einer ionenselektiven Messelektrode wird die Aktivität einer Ionenart erfasst, bei der Glaselektrode H₃O⁺ (bzw. OH-), wobei es eine Vielzahl anderer ionenselektiver Messelektroden gibt, die für Kationen z.B. Na⁺, K⁺, Ag⁺, NH₄⁺, Cd²⁺, Cu²⁺, Pb²⁺, Ca²⁺ oder dergleichen oder Anionen z.B. Br⁻, Cl-, CN⁻, F-, I⁻, NO₃⁻ oder S²⁻ oder dergleichen zur spezifischen Messung eingesetzt werden können. Die ionenselektiven Membranen sind für einen Massetransport weitgehend geschlossen. Das heißt, aus einer Glaselektrode treten im Wesentlichen keine Stoffe, z.B. aus der Elektrodenfüllung, dem Messelektrodenelektrolyten, in das Messgut über.

Die ionenselektiven Elektroden werden mit einer Bezugselektrode über einen Bezugselektrodenelektrolyten, ein Diaphragma und das Messgut verbunden. Im Gegensatz zur Messelektrode besteht bei der Bezugselektrode mit ihrem Diaphragma oder der Open-Junction-Öffnung allerdings die Möglichkeit eines wenn auch geringen Massetransports aus der Bezugselektrodenflüssigkeit an die Außenseite der Bezugselektrode, wenn diese der Luft zugewandt ist. Dabei könnten sich Kristalle aus dem Salz des Bezugselektrodenelektrolyten bzw. konzentrierte Tröpfchen der Bezugselektrodenflüssigkeit bilden, die an dem Diaphragma haften bzw. in den Bag des Einmal-Bioreaktors fallen und diesen verschmutzen. Es ist insbesondere bei kleinere Bioreaktoren unerwünscht, dass Salzmengen aus Bezugselektrodenelektrolyten das flüssige Messgut belasten, wenn z.B. ein Bag-Reaktor mit Kulturflüssigkeit befüllt wird.

Bewährt haben sich in der Praxis so genannte Einstabmessketten mit einer Messelektrode, bestehend aus der Messmembran (im Falle der Glaselektrode eine dünne Glasmembran) und einer Bezugselektrode (in den meisten Fällen ein Ag/AgCI-Elektrode), oft zusätzlich kombiniert mit einem Temperaturfühler, wobei alle Komponenten in einem Gehäuse angeordnet sind und nur die Messelektrodenfläche und das mit der Bezugselektrode verbundene Diaphragma bzw. eine Open-Junction-Öffnung, freiliegen.

Der Bezugselektrodenelektrolyt sollte einen kleinen elektrischen Widerstand haben, er darf mit der Messlösung nicht reagieren oder diese verschmutzen. Der Bezugselektrodenelektrolyt in der Ag/AgCI-Bezugselektrode ist häufig eine 3 M KCI-Lösung. Messelektrode und Bezugselektrode sind physikalisch voneinander getrennt und nur die Messmembran der Messelektrode und der Bezugselektrodenelektrolyt der Kammer der Bezugselektrode stehen mit dem Messgut in Verbindung. Dabei muss darauf geachtet werden, dass kein Bezugselektrodenelektrolyt oder nur sehr wenig die Kammer der Bezugselektrode verlässt. Dies erreicht man durch einen gut ionenleitenden Verschluss mit einem Diaphragma (z.B. eine Glasfritte oder eine poröse Keramik) oder durch ein winziges Loch im Gehäuse der Bezugselektrode - eine so genannte Open-Junction-Öffnung, sodass im Prinzip nur Ionenleitung zwischen Bezugselektrodenraum und Messraum mit dem Messgut besteht. Das Diaphragma kann eine poröse Scheidewand sein. Aufgabe des Diaphragmas ist es folglich, den Bezugselektrodenelektrolyten von der Probelösung zu trennen und eine Durchmischung zu verhindern - gleichzeitig muss das Diaphragma die elektrische Verbindung der beiden Halbzellen (Messelektrode und Bezugselektrode) sicherstellen. Es sind verschiedene Ausführungen gebräuchlich: (Kunststoff)-Faserdiaphragma, Platindiaphragma, Schliffdiaphragma, Keramikdiaphragma etc. Die sich zwischen Messelektrode und Bezugselektrode über die Membran oder die Open-Junction-Öffnung einstellende Messspannung, d.h. das Potential, ist dann das eigentliche Messsignal.

Gemäß der Erfindung wird nach Herstellung und Erfassung der Kalibrierparameter oder ähnlicher Qualitätswerte der pH-Elektrode das Diaphragma durch Aufbringen einer Siegelschicht temporär verschlossen. Das Aufbringen kann entweder durch Tropfen, Streichen, Sputtern, Bedampfen, Kleben, Pressen etc. mit einer in Lösung, Schmelze, Folie oder Feststoff befindlichen Substanz erfolgen. Die dazu zu verwendende Substanz sollte vorzugsweise folgende Mindesteigenschaften erfüllen:
- Wasserlöslichkeit, und
- nicht das Zellwachstum hemmen und/oder
- ein für pharmazeutische Herstellungsverfahren zugelassenes Material (z.B. Ph-Eur., USP, FDA) darstellen

Als mögliche Stoffe kommen folgende Stoffgruppen in Frage:
- sowieso in der Kultur vorhandene Stoffe, wie Nährmittel, z.B.: Glucose oder andere Zucker
- wässrig abbaubare biologische Polymere, z.B. polymerisierte Stärke, Polyvinylalkohole,
- Hilfsstoffe aus Medikamenten, wie z.B. mikrokristalline Zellulose (MCC).

Erfindungsgemäß ist das Material der ablösbaren und/oder auflösbaren Schutzbeschichtung (9) ausgewählt aus: Zuckern, Zuckeralkoholen und/oder löslicher Stärke, und/oder Gemischen davon mit Polyvinylalkohol und/oder mikrokristalliner Zellulose.

Nach Aufbringen und ggf. Trocknen ist die Siegelschicht aus den ausgewählten Substanzen so stabil, dass zwar ggf. Wasser z.B. diffusiv durch die Schicht transportiert werden kann, jedoch augenscheinlich keine Salze in qualitätsmindernder Menge transportiert werden. Überraschenderweise wurde nach der Sterilisierung durch Gammabestrahlung kein Auskristallisieren von Elektrolyt oder Tröpfchenbildung auch bei längerer Lagerung beobachtet.

Wird nun nach Lagerung der Bag mit Medium oder Puffer befüllt, löst sich die aufgebrachte Schicht innerhalb weniger Minuten im Medium auf und das Diaphragma o.ä. ist wieder frei für die Messung. Dies beeinflusst die natürliche Quellzeit der Glasspitze sowie des Diaphragmas und damit die Zeit bis zur Einsatzfähigkeit nur minimal. Man vermeidet damit auch die Verwendung eines mechanischen Schutzes des Diaphragmas durch Einbringung in ein Kompartiment o.ä.

Als in der Erfindung verwendete Bezugselektroden können neben der bereits erwähnten Ag/AgCI-Elektrode die Standard-Wasserstoff-Elektrode, die gesättigte Kalomel-Elektrode, die Cu/CuSO₄-Elektrode oder die Hg/Hg₂SO₄-Elektrode genannt werden, wobei aufgrund ihrer Einfachkeit und Stabilität die Ag/AgCI-Elektrode bevorzugt ist. Durch Einsatz geeigneter Diffusionsstrecken kann der Bezugselektrolyt quasi silberfrei gehalten werden.

Einmalige Verwendung oder Single-use bedeutet innerhalb der vorliegenden Erfindung, dass die potentiometrische Messkette nur einmal eingesetzt und danach als Komponente einer Vorrichtung, z.B. eines Bioreaktors zur einmaligen Verwendung, einzeln oder mit der gesamten Vorrichtung entsorgt wird.

Ein Messgut im Sinne der vorliegenden Erfindung ist eine wässrige Lösung (als wässrige Lösung werden alle flüssigen Mischungen bezeichnet, die wenigstens 50% Wasser enthalten), z.B. der Inhalt eines biochemischen Reaktors oder Fermenters, z.B. eine Kulturlösung.

Salze, die als Bezugselektrodenelektrolyt verwendet werden können, sind insbesondere Alkalimetallhalogenide, z.B. Natriumchlorid, Lithiumchlorid, Natriumbromid, Kaliumbromid, Ammoniumchlorid, aber insbesondere Kaliumchlorid.

Ablösbar im Sinne der vorliegenden Erfindung bedeutet, dass die erfindungsgemäß verwendete Schutzbeschichtung sich beim (d.h. sofort) oder nach kürzerem Kontakt (z.B. 1 s bis 1 min oder 5 s bis 2 min oder 10 s bis 5 min) mit dem Messgut von dem Diaphragma z.B. zunächst durch Quellen und dann durch mechanische Spannung aufgrund der Längenänderung von dem Untergrund hebt und ablöst, wobei sich das abgelöste Material langsam aber nicht störend in dem Messgut löst.

Eine Schutzbeschichtung im Sinne der vorliegenden Erfindung ist ein wie immer gearteter Überzug über das Diaphragma oder die Open-Junction-Öffnung mit einer Dicke, die Ablösung bzw. Auflösung des Überzugs bzw. der Schutzbeschichtung in angemessener Zeit erlaubt. Die Dicke der Schutzbeschichtung hängt von der mechanischen Stabilität des Materials und der Ab- bzw. Auflösungsgeschwindigkeit des Schutzbeschichtungsmaterials ab.

Die erfindungsgemäß vorgesehene Schutzbeschichtung ist bei Kontakt mit einer wässrigen Lösung ablösbar und/oder auflösbar und erlaubt dann ionischen Zugang zum Diaphragma oder zur Open-Junction-Öffnung. Davor dient sie als Barriere für den Elektrolyten der Bezugselektrode während der Lagerung, um insbesondere Kristall- oder Tropfenbildung zu verhindern. Die Schutzbeschichtung in US 3 591 482 A, wie eingangs aufgeführt, hat demgegenüber eine andere Aufgabe, d.h. sie soll in der Messlösung z.B. verhindern, dass die Ag-Bezugselektrode altert und trotzdem die Chlorid-Ionensensitivität beibehält. Sie darf sich also bei Kontakt mit der Messlösung weder ab- noch auflösen, um diese Aufgabe zu erfüllen.

Ein für pharmazeutische Herstellungsverfahren zugelassenes Material genügt vorzugsweise den im deutschen Arzneimittelgesetz angeführten Anforderungen. Insbesondere bedeutet dieses Qualitätsmerkmal, dass durch die Ablösungs- oder Auflösungsvorgänge dem Messgut keine Stoffe zugeführt werden, welche die Qualität eines auf diesem Wege hergestellten biochemischen Produkts beeinträchtigen könnten. Zum Beispiel dürfen die aus dem Messgut hergestellten Produkte keine ab- oder aufgelösten Bestandteile enthalten, welche nicht bei der Aufreinigung gemäß den Grundsätzen der Good Manufacturing Practice entfernbar wären oder falls nicht vollends entfernbar, die vorgesehene pharmazeutische Qualität oder chemische Reinheit des Produkts beeinträchtigen würden.

Stoffe, die mit Kulturflüssigkeit in Kontakt kommen und das Zellwachstum nicht hemmen dürfen, können vor dem Einsatz daraufhin geprüft werden. So können Zellen mit den Materialien des erfindungsgemäß einzusetzenden Schutzbeschichtungsmaterials in Berührung gebracht und ihr Wachstumsverhalten getestet werden.

Eine Kulturflüssigkeit ist in der Regel mit dem Inhalt eines biochemischen oder biotechnologischen Reaktors identisch. Sie enthält alle für das Wachstum von Mikroorganismen notwendigen Nährstoffe und Hilfsstoffe. In einer Kulturflüssigkeit üblicherweise vorhandene Stoffe sind Nährstoffe, welche die Hauptnährelemente z.B. Kohlenstoff, Stickstoff und Phosphor enthalten. Weiterhin werden Nährstoffe benötigt, welche je nach Mikroorganismus Spurenelemente, z.B. Mangan, Zink, Kupfer, Kobalt, etc. liefern. Des Weiteren sind je nach Mikroorganismus Nährstoffe erforderlich, welche Moleküle enthalten, die von den Mikroorganismen oder anderweitigen Zellen nicht selbst synthetisiert werden können und daher extern zugeführt werden müssen, wie essentielle Aminosäuren, Fettsäuren oder Mono- oder Oligosaccharide. Von Bedeutung sind ferner Mineralstoffe, die Alkalimetallionen (einschließlich Ammoniumionen), Erdalkalimetallionen, Eisenionen und biochemisch relevante Anionen, wie Halogenide, Nitrat, Sulfat, Phosphate, Silikate, Hydroxid oder Oxide enthalten.

Trocknen im Sinne der vorliegenden Erfindung bedeutet, dass das erfindungsgemäß eingesetzte Schutzbeschichtungsmaterial in wässriger Lösung aufgetragen, nach Einwirkung von Wärme, zum Beispiel Heißluft, einen Feststoff bzw. einen festen Film bildet, der nicht mehr zulässt, dass Bezugselektrodenelektrolyt aus dem Raum der Bezugselektrode nach außen dringt und dort eine Verunreinigung, wie Salzkristalle oder Tröpfchen, bildet.

Die Einweg-Messketten können vorkalibriert montiert werden. Eine Kalibrierung ist erforderlich, um Abweichungen der realen Elektrode vom Idealverhalten in Bezug auf den Nullpunkt und die Steilheit der Elektrode zu bestimmen und rechnerisch zu kompensieren. Der als Kalibrierung bezeichnete Vorgang bei der pH-Messung stellt eigentlich eine Justierung dar. Dazu werden Standardlösungen mit definierten pH-Werten verwendet. Der Nullpunkt der Elektroden liegt heute normalerweise bei einem pH-Wert von 7,00. Die Steilheit der aktuellen Elektrode wird anhand weiterer Pufferlösungen (meist pH=4,00 und pH=10,00) bestimmt und vom Messgerät für die spätere Versuchsauswertung übernommen. Vorkalibrierte und trockene Glaselektroden benötigen allerdings eine gewisse Zeit, bis sich eine konstante Messung einstellt.

Als biochemische Umsetzung wird im Zusammenhang mit dieser Erfindung jede Form der Umwandlung von Stoffen über biochemische Prozesse bezeichnet. Eine solche Umwandlung schließt die Züchtung von Zellen, von Mikroorganismen einschließlich Viren, die Expression von Proteinen aus Wirts-Mikroorganismen, enzymatische Umsetzungen, biochemische Polymerisationsvorgänge, etc. ein.

Lösungen sind homogene Mischungen von zwei oder mehr Stoffen. Meist liegt ein Stoff (Lösungsmittel) in großem Überschuss vor. Der gelöste Stoff liegt in Form von Molekülen oder Ionen vor. Bei einer elektrochemischen Messung, wie der Potentiometrie, werden meistens wässrige Lösungen betrachtet. Lösungen im Sinne der vorliegenden Erfindung sind aber auch kolloidale Lösungen und andere feine Dispersionen oder Suspensionen von Stoffen, die mit der vorgesehenen Verwendung im Einklang sind, d.h. sie stören beispielsweise weder den Ablauf der biochemischen Umsetzung noch beeinträchtigen sie die vorgesehene chemische oder pharmazeutische Qualität des Zielprodukts.

Die nachstehenden Beispiele sind nicht Teil der Erfindung. Alle Prozentangaben sind auf das Gewicht bezogen, sofern nichts anderes ausgewiesen ist.

### Beispiele

### Beispiel 1

Eine Einweg-pH-Einstab-Messkette wird über dem Diaphragma/open junction durch Auftragen einer konzentrierten Hydroxypropylmethylcelluloselösung aus 5 % Metolose (vom Hersteller Harke Pharma), 45% Ethanol und 50 % Wasser mit einer Schutzbeschichtung versehen und dieser Film wird an der Luft trocknen gelassen.

Für den Ansatz der Lösung wurde Ethanol als Dispergiermittel verwendet, um den pulverfömigen Rohstoff gut zu verteilen, bevor das Wasser zugegeben wurde und um die anschließende Trocknung der aufgetragenen Lösung zu beschleunigen.

Die Messkette wird 28 Tage bei 50°C im Labortrockenschrank gelagert. Keine Kristalle oder Tröpfchen, die von der Bezugselektrodenflüssigkeit stammen, wurden nach Ablauf der Lagerungszeit beobachtet.

Die Quellzeit der Elektrode in pH7 NIST-Puffer wurde getestet, indem der Zeitpunkt bestimmt wurde, bei dem die Abweichung der pH-Messung (Messfrequenz: 1s) von einem Punkt zum nächsten weniger als 0,1 mV beträgt. Die beobachtete Quellzeit betrug 30 min.

### Beispiele 2 bis 3

| **Beispiel** | **Substanz** | **Konzentration** | **Quellzeit (min)** | **Kristall- oder Tröpfchenbildung** |
|---|---|---|---|---|
| 2 | Pharmacoat 606 | 15% in 42,5% EtOH und 42,5% H₂O | 20 | Nein |
| 3 | Pharmacoat 606 | 10 % in 40% EtOH und 50% H₂O | Nicht bestimmt | Nein |

### Vergleichsbeispiel

Mehrere Einweg-pH-Einstab-Messelektroden wurden 28 Tage bei 50°C im Labortrockenschrank gelagert. Es wurde Kristallbildung, die von der Bezugselektrodenflüssigkeit stammt, beobachtet.

### Bezugsziffern:

- 1: Ionenselektive Elektrode
- 2: Bezugselektrode
- 3: Messelektrodenraum mit Innenelektrolyt der ionenselektiven Elektrode
- 4: Bezugselektrodenraum mit Bezugselektrodenelektrolyt
- 5: Leitelektrode der ionenselektiven Elektrode
- 6: Bezugselektrode
- 7: Ionenselektive Membran
- 8: Übergang von Bezugselektrodenraum zum Messraum - hier eine Open-Junction-Öffnung
- 9: ablösbare und/oder auflösbare Schutzbeschichtung
- 10: Seitenwand des Einweg-Bioreaktors
- 11: Schweiß- oder Klebenaht

## Patentansprüche

1. Potentiometrische Messkette, umfassend eine ionenselektive Elektrode (1), eine Bezugselektrode (2) mit einem Bezugselektrodenraum (4) und einen Bezugselektrodenelektrolyten darin, wobei die Bezugselektrode (2) ein Diaphragma (8) oder eine Open-Junction-Öffnung oder eine Kombination davon aufweist, wobei mindestens das Diaphragma (8) oder die Open-Junction-Öffnung mit einer bei Kontakt mit einer wässrigen Lösung ablösbaren und/oder auflösbaren Schutzbeschichtung (9) versehen ist,
**dadurch gekennzeichnet, dass** das Material der ablösbaren und/oder auflösbaren Schutzbeschichtung (9) ausgewählt ist aus:
Zuckern, Zuckeralkoholen und/oder löslicher Stärke, und/oder Gemischen davon mit Polyvinylalkohol und/oder mikrokristalliner Zellulose.

2. Potentiometrische Messkette nach Anspruch 1, wobei die ionenselektive Elektrode (1) eine H+ selektive Glaselektrode ist, die Bezugselektrode (2) eine Ag/AgCI-Bezugselektrode ist und der Bezugselektrodenelektrolyt ein wässriges Alkalihalogenid ist.

3. Verfahren zur Behandlung einer potentiometrischen Messkette gemäß einem der vorangehenden Ansprüche, wobei
- eine ablösbare und/oder auflösbare Schutzbeschichtung gemäß einem der Ansprüche 1 bis 2 auf das Diaphragma bzw. die Open-Junction-Öffnung aufgebracht wird,
- die so erhaltene Schutzbeschichtung trocknen lassen wird oder getrocknet wird,
- die Messkette integral in einem Behälter eingebaut wird und
- der Behälter mit der Messkette sterilisiert wird.

4. Bioreaktor, ausgestattet mit einer potentiometrischen Messkette nach einem der Ansprüche 1 bis 2 oder einer nach Anspruch 3 erhaltenen potentiometrischen Messkette.

5. Bioreaktor nach Anspruch 4, wobei die ionenselektive Elektrode vorkalibriert ist.

## Claims

1. Potentiometric measuring chain comprising an ion-selective electrode (1), a reference electrode (2) with a reference electrode space (4), and a reference electrode electrolyte therein, the reference electrode (2) having a diaphragm (8) or an open-junction opening or a combination thereof, at least the diaphragm (8) or the open-junction opening being provided with a protective coating (9) that is detachable and/or dissolvable upon contact with an aqueous solution,
**characterized in that** the material of the detachable and/or dissolvable protective coating (9) is selected from:
sugars, sugar alcohols and/or soluble starch, and/or mixtures thereof with polyvinyl alcohol and/or microcrystalline cellulose.

2. Potentiometric measuring chain according to claim 1, wherein the ion-selective electrode (1) is an H⁺-selective glass electrode, the reference electrode (2) is an Ag/AgCl reference electrode, and the reference electrode electrolyte is an aqueous alkali metal halide.

3. Method for treating a potentiometric measuring chain according to any of the preceding claims, wherein
- a detachable and/or dissolvable protective coating according to any of claims 1 to 2 is applied to the diaphragm or the open-junction opening,
- the protective coating thus obtained is left to dry or is dried,
- the measuring chain is integrally fitted in a container and
- the container containing the measuring chain is sterilized.

4. Bioreactor equipped with a potentiometric measuring chain according to any of claims 1 to 2 or with a potentiometric measuring chain obtained according to claim 3.

5. Bioreactor according to claim 4, wherein the ion-selective electrode is precalibrated.

## Revendications

1. Chaîne de mesure potentiométrique, comprenant une électrode sélective d'ions (1), une électrode de référence (2) avec une chambre d'électrode de référence (4) et un électrolyte d'électrode de référence dans celle-ci, dans laquelle l'électrode de référence (2) présente un diaphragme (8) ou une ouverture à jonction ouverte ou une combinaison de ceux-ci, dans laquelle au moins le diaphragme (8) ou l'ouverture à jonction ouverte est pourvu(e) d'un revêtement protecteur (9) pouvant être détaché et/ou dissout lors d'un contact avec une solution aqueuse,
**caractérisée en ce que** le matériau du revêtement protecteur (9) pouvant être détaché et/ou dissout est sélectionné parmi :
les sucres, alcools de sucre et/ou l'amidon soluble, et/ou des mélanges de ceux-ci avec de l'alcool polyvinylique et/ou de la cellulose microcristalline.

2. Chaîne de mesure potentiométrique selon la revendication 1, dans laquelle l'électrode sélective d'ions (1) est une électrode en verre sélective de H+, l'électrode de référence (2) est une électrode de référence Ag/AgCl et l'électrolyte d'électrode de référence est un halogénure alcalin aqueux.

3. Procédé pour le traitement d'une chaîne de mesure potentiométrique selon l'une quelconque des revendications précédentes, dans lequel
- un revêtement protecteur pouvant être détaché et/ou dissout selon l'une quelconque des revendications 1 à 2 est appliqué sur le diaphragme ou l'ouverture à jonction ouverte,
- le revêtement protecteur ainsi obtenu est laissé sécher ou séché,
- la chaîne de mesure est intégralement montée dans un récipient et
- le récipient est stérilisé avec la chaîne de mesure.

4. Bioréacteur, équipé d'une chaîne de mesure potentiométrique selon l'une quelconque des revendications 1 à 2 ou d'une chaîne de mesure potentiométrique obtenue selon la revendication 3.

5. Bioréacteur selon la revendication 4, dans lequel l'électrode sélective d'ions est précalibrée.
